# EUROPÄISCHE PATENTSCHRIFT

(11) **EP 3 119 231 B1**
(45) Veröffentlichungstag und Bekanntmachung des Hinweises auf die Patenterteilung: **25.09.2019**
(21) Anmeldenummer: 15705289.5
(22) Anmeldetag: 16.02.2015
(51) Int. Cl.: A44B 18/00, F16L 3/26, F24D 3/14, B32B 5/02, B32B 7/06, B32B 7/14, B32B 3/06, B32B 3/26, B32B 3/30, B32B 7/05

(54) **HALTEFLÄCHE MIT DREIDIMENSIONALER STRUKTURFLÄCHE**
BONDING AREA WITH THREE DIMENSIONALLY STRUCTURED SURFACE
PLAQUE DE RETENUE À SURFACE STRUCTURÉE TRIDIMENSIONNELLE

(30) Priorität: 20.03.2014 DE 202014101286 U
(43) Veröffentlichungstag der Anmeldung: 25.01.2017
(73) Patentinhaber: Wischemann Kunststoff GmbH, 48607 Ochtrup (DE)
(72) Erfinder: WISCHEMANN, Ingo, 48607 Ochtrup (DE); OSSENDORF, Stefan Hubert, 48607 Ochtrup (DE)
(74) Vertreter: Habbel, Ludwig
(86) Internationale Anmeldenummer: PCT/EP2015/053225
(87) Internationale Veröffentlichungsnummer: WO 2015/139899

(56) Entgegenhaltungen:
- EP-A1- 1 706 264
- EP-A1- 2 034 862
- EP-A2- 0 813 277
- EP-A2- 1 583 110
- WO-A1-99/01048
- DE-A1- 2 742 429
- DE-C1- 19 815 023
- DE-U1- 8 134 009
- DE-U1-202010 009 133
- DE-U1-202010 011 520
- DE-U1-202012 102 478
- DE-U1-202013 010 084

## Beschreibung

Die Erfindung betrifft eine Haltefläche, die eine Strukturfläche aufweist, welche zur Festlegung von Gegenständen mittels eines Haftverschlusses dient.

Aus den EP 1 583 110 A2, EP 2 034 862 A1, EP 1 706 264 A1 und WO 99/01048 A1 sind jeweils Halteflächen als Teil eines Häkchen- bzw. Klettverschlusses bekannt, bei denen ein Träger vorgesehen ist, beispielsweise in Form einer Kunststofffolie, sowie eine Strukturfläche in Form des so genannten Flauschteils des Häkchen- bzw. Klettverschlusses. Die Strukturfläche ist dabei jeweils direkt mit dem Träger verbunden, indem sie unmittelbar auf den Träger aufkaschiert ist, nämlich bereichsweise in diesen eintaucht, während benachbarte Bereiche der Strukturfläche nicht mit dem Träger verbunden sind. Die genannte EP 1 583 110 A2 betrifft im Fahrzeugbau die Befestigung von elektrischen Kabeln an Verkleidungselementen wie z. B. einem vorgeformten so genannten Dachhimmel im Inneren eines Fahrzeugs. Die anderen genannten Druckschriften betreffen die Verwendung eines Klettverschlusses für Kleidungsstücke, Windeln oder dergleichen.

Die Haltefläche weist erstens einen Träger auf, welcher beispielsweise die grundsätzliche Formgebung der Haltefläche bestimmt, z. B. rechteckig länglich, quadratisch, sechseckig oder dergleichen, sowie die Materialstärke von 1-2 mm bis hin zu mehreren Zentimetern. Der Träger bestimmt weiterhin mechanische Eigenschaften der Haltefläche, z. B. ob diese weich oder starr, verformbar oder formstabil ist. Der Träger bestimmt schließlich die grundsätzliche Topographie der Haltefläche, z. B. ob diese eine im wesentlichen ebene oder konturierte bzw. profilierte Oberfläche aufweist.

Diese ebene oder konturierte bzw. profilierte Oberfläche der Haltefläche wird auch als Vorderseite bezeichnet, da an ihr die erwähnten Gegenstände festgelegt werden können. Mit ihrer gegenüberliegenden Rückseite wird die Haltefläche ihrerseits befestigt, z. B. auf einen Untergrund aufgelegt oder an einem Hintergrund befestigt.

Die Haltefläche weist zweitens eine Strukturfläche auf, welche die eine Hälfte des Haftverschlusses bildet. Sie ist auf der erwähnten Vorderseite des Trägers angeordnet und bildet somit die Vorderseite der Haltefläche.

Zu Bauzwecken ist die Verwendung eines Klettverschlusses in zweierlei Hinsicht bekannt:
Erstens sind so genannte Noppenplatten bekannt, die dazu dienen, Rohrleitungen eines Flächentemperiersystems zur Kühlung bzw. Beheizung eines Raums - wie z. B. einer Fußboden-, Wand- oder Deckenheizung - dadurch festzulegen, dass die Rohrleitung zwischen den Noppen durch Klemmung fixiert ist. Aus der DE 198 15 023 C1, die als nächstliegender Stand der Technik angesehen wird, ist es in diesem Zusammenhang bekannt, eine vergleichsweise dünne Noppenplatte, nämlich eine so genannte Noppenfolie zu verwenden, und diese mittels eines Klettverschlusses an einer darunter befindlichen, dickeren, aus einem Dämmstoff bestehenden Platte festzulegen.

Zweitens ist es aus der DE 20 2010 011 520 U1 bekannt, für die Verlegung der Rohrleitungen einer Fußbodenheizung keine Noppenplatten zu verwenden, sondern die Rohrleitung selbst mittels eines Klettverschlusses an einer planen, nicht profilierten und somit von Noppen freien Halteplatte zu fixieren.

In den beiden die Bauindustrie betreffenden Fällen sind die Flauschfolien stets plan liegend, also flach verlaufend, an ihrem jeweiligen Träger gehalten.

Ein Häkchen- oder Klettverschluss stellt eine in der Praxis gebräuchliche Variante eines lösbaren Verschlusses dar, wobei auch anderen Varianten von Verschlüssen verwendet werden können, insbesondere wenn sie jeweils eine Lagekorrektur der verlegten Rohre ermöglichen und die daher im Rahmen des vorliegenden Vorschlags als Haftverschlüsse bezeichnet werden. Beispielsweise können die beiden strukturierten Oberflächen des Flächenheizungsrohres und der Haltefläche gleich ausgestaltet sein und jeweils eine Vielzahl etwa pilzförmig ausgestalteter Halteelemente aufweisen, die ineinander gedrückt und anschließend auch wieder gelöst werden können.

Da bei einem praxisüblichen, als Klettverschluss ausgestalteten lösbaren Verschluss der mit Schlaufen versehene Flauschteil, der die eine Strukturfläche bildet, preisgünstiger herstellbar ist als der Häkchenteil, welcher die damit zusammenwirkende andere Strukturfläche bildet, werden die auf dem Boden verlegten, großflächig mit einem Teil des Verschlusses versehenen Folien mit dem Flauschteil versehen und somit als Flauschfolien bezeichnet. Der demgegenüber teurere Häkchenteil ist an dem Rohr vorgesehen und üblicherweise nicht als vollflächige Ummantelung ausgestaltet, sondern als wendelförmig verlaufendes Band, so dass nur eine erheblich geringere Fläche dieses zweiten, teureren Teils des Verschlusses erforderlich ist. Unter anderen wirtschaftlichen Bedingungen kann jedoch auch vorgesehen sein, dass der Häkchenteil die Strukturfläche der Haltefläche bildet und der daran zu befestigende Gegenstand - z. B. ein Flächenheizungsrohr - mit dem Flauschteil versehen ist.

Der Erfindung liegt die Aufgabe zugrunde, eine gattungsgemäße Haltefläche dahingehend zu verbessern, dass diese möglichst wirtschaftlich hergestellt werden kann sowie eine zuverlässige Fixierung eines Gegenstandes auf der Haltefläche ermöglicht.

Diese Aufgabe wird durch eine Haltefläche mit den Merkmalen des Anspruchs 1 gelöst. Vorteilhafte Ausgestaltungen sind in den Unteransprüchen beschrieben.

Die Erfindung schlägt mit anderen Worten zwei Maßnahmen vor:
Erstens ist vorschlagsgemäß vorgesehen, dass die Strukturfläche mit einem Materialüberschuss auf dem Träger befestigt ist, wie dies von den erstgenannten Druckschriften bekannt ist. Diese Befestigung erfolgt in der Weise, dass das Material der Strukturfläche wellig auf dem Träger aufliegt. Auf diese Weise bewirkt bereits die Strukturfläche selbst eine makroskopisch dreidimensionale Ausgestaltung der Haltefläche, die über die mikroskopische Rauhigkeit hinausgeht, welche die Strukturfläche materialbedingt aufweist. Mikroskopisch ist beispielsweise der Flauschteil eines Häkchenverschlusses rau ausgestaltet, weil er eine Vielzahl von Schlaufen aufweist. Er kann beispielsweise in Form eines textilen Gewirkes vorliegen. Makroskopisch stellt die Strukturfläche jedoch eine ebene Fläche dar, wenn dieses Gewirke plan ausgebreitet ist, beispielsweise auf einer ebenen Fläche aufliegt und / oder straff gespannt ist. Wenn das selbe Gewirke jedoch gekräuselt, wellig oder in Falten vorliegt, weist die Strukturfläche nicht nur eine mikroskopische, sondern auch eine makroskopische Rauhigkeit bzw. Reliefstruktur in Form der Kräuselung, der Welligkeit bzw. des Faltenwurfs auf. Nachfolgend wird der Begriff "wellig" stellvertretend für sämtliche makroskopischen Reliefstrukturen der Strukturfläche verwendet, also auch wenn die Reliefstruktur der Strukturfläche nicht regelmäßig angeordnete bzw. verlaufende Wellen aufweist, sondern unregelmäßig verlaufende bzw. scharfe Falten oder anderweitige Vorsprünge.

Eine zuverlässige Fixierung eines Gegenstandes auf der Haltefläche wird auch dann noch ermöglicht, wenn eine der beiden Oberflächen, die den Haftverschluss bilden sollen, eine problematische Geometrie aufweisen.

Vorschlagsgemäß wird eine Tiefziehfolie als Träger verwendet die dreidimensional verformt ist und eine Reliefstruktur bildet. Es kann eine Tiefziehfolie, deren dreidimensionale Struktur nur gering ausgeprägt ist und die dementsprechend flach ist, den Träger bilden. Dennoch kann eine ausreichend großflächige Anlage auch von Gegenständen, die aufgrund ihrer Geometrie eigentlich nur eine vergleichsweise kleine Kontaktfläche für die Anlage an der Haltefläche aufweisen, ermöglicht werden: beispielsweise kann ein Rohr, welches nur eine Linienberührung mit einer völlig planen Fläche ermöglicht und insofern eine für einen Haftverschluss problematische Geometrie aufweist, sicher auf der Haltefläche gehalten werden, da der Materialüberschuss der Strukturfläche die auf die Haltefläche gepresste Rohrleitung über einen größeren Anteil des Rohrumfangs erfasst als eine flache Strukturfläche, die keine makroskopische Rauhigkeit bzw. keine makroskopische Reliefstruktur aufweist. Zudem ermöglicht die Reliefstruktur eine optische Verlegehilfe z.B. beim Verlegen von Rohrleitungen, wie später noch näher erläutert wird.

Nachfolgend wird vielfach die Befestigung eines Rohrs an der Haltefläche erwähnt, wobei dies ein Anwendungsfall ist, wie er z. B. bei der Installation von Flächentemperiersystemen auftritt oder wenn bei Bauarbeiten Versorgungsleitungen in Form von Kabeln oder Rohren temporär verlegt werden sollen. Der vorliegende Vorschlag ist jedoch nicht auf die Befestigung eines Rohrs an der Haltefläche beschränkt. So kann z. B. die vorschlagsgemäße Haltefläche auch genutzt werden, um andere Gegenstände temporär zu befestigen, beispielsweise Paneele oder Fliesen an einer Wand, oder Wandelemente an einer Stützkonstruktion, was beispielsweise im Messebau oder in Ausstellungsräumen vorteilhaft sein kann.

Für die Anwendung als Halteplatte für ein Flächenheizungsrohr ist es in der Praxis üblich, die dabei verwendete Haltefläche zu bedrucken, wobei grafische Elemente wie Linien oder Punkte in einem bestimmten Raster regelmäßig angeordnet sind. Zur Erzielung der gewünschten thermischen Leistung und zu deren gleichmäßiger Verteilung ist zu beachten, dass eine bestimmte Anzahl der Rohrleitungsabschnitte der Flächenheizung in möglichst gleichmäßigen Abständen verlegt wird, was mittels des auf die Haltefläche aufgedruckten Rasters erleichtert wird. Daher wird ein solches Raster auch als Verlegeraster bezeichnet.

Die zweite vorschlagsgemäße Maßnahme bei der Ausgestaltung der Haltefläche lässt auch ohne zusätzliche Bedruckung ein Verlegeraster optisch erkennen. Eine wirtschaftliche Herstellung der Haltefläche kann somit auch dadurch unterstützt werden, dass Material und Verfahrensschritte eingespart werden können, die ansonsten durch eine Bedruckung der Haltefläche mit Farbe erforderlich wären, nämlich für die Schaffung des Verlegerasters. Wenn die Strukturfläche mit dem Träger nicht vollflächig auf der gesamten Fläche des Trägers verbunden ist, sondern nur bereichsweise, ergibt sich üblicherweise ein optischer Unterschied der verbundenen Flächenabschnitte zu benachbarten Flächenabschnitten der Strukturfläche, wo diese sich lediglich auf dem Träger befindet, nicht jedoch durch eine Verklebung oder einen Kaschiervorgang mit dem Träger verbunden ist. Die verbundenen Flächenabschnitte sind vorschlagsgemäß in Art eines Verlegerasters verteilt angeordnet. Beispielsweise kann die oben erwähnte profilierte Walze an ihrem Umfang entsprechend verteilt angeordnete nach außen vorstehende Abschnitte aufweisen. Im Falle einer Verklebung kann die optische Erkennbarkeit der verbundenen Flächenabschnitte durch eine bestimmte Farbgebung des Klebstoffs unterstützt werden. Da der Träger selbst nicht eine ebene Oberfläche, sondern seinerseits eine dreidimensionale Reliefstruktur aufweist, kann diese vorteilhaft in Art eines Verlegerasters ausgestaltet sein, so dass auch ohne Verwendung von Klebstoff, beim unmittelbaren Aufkaschieren der Strukturfläche auf den Träger, das Verlegeraster optisch erkennbar wird.

Zur Erzielung der makroskopischen Reliefstruktur der Strukturfläche können unterschiedliche Verfahrensschritte einzeln oder in Kombination durchgeführt werden:
Beispielsweise kann die als Halbzeug angelieferte Strukturfläche, beispielsweise eine textile Schlaufen- bzw. Schlingenware, mittels eines Andruck-Werkzeugs, beispielsweise einer Walze, auf den Träger aufgepresst werden. Die Verbindung zwischen der Strukturfläche und dem Träger kann beispielsweise mittels Klebstoff geschaffen werden.

Vorteilhaft kann vorgesehen sein, dass der Träger bei der Anbringung der Strukturfläche in der Art plastisch verformbar ist, dass die Strukturfläche teilweise in die Oberfläche an der Vorderseite des Trägers eingepresst werden kann. Nach dem anschließenden Erhärten bzw. Abbinden des Trägers ist eine feste Verbindung zwischen der Strukturfläche und dem Träger geschaffen, und zwar auch ohne Verwendung zusätzlicher Materialien wie z. B. Klebstoff. Dieser Vorgang wird im Rahmen des vorliegenden Vorschlags als unmittelbares bzw. direktes Aufkaschieren bezeichnet.

Die erforderliche plastische Verformbarkeit für den Kaschiervorgang kann der Träger beispielsweise während seiner Herstellung aufweisen. In diesem Fall wird nicht erst separat der Träger fertiggestellt und anschließend, eventuell Stunden oder Tage später, die Strukturfläche direkt aufkaschiert. Vielmehr wird in den plastisch verformbaren Träger, noch bevor er ausgehärtet oder abgebunden ist und somit fertiggestellt ist, die Strukturfläche aufkaschiert, so dass dieser direkte Kaschiervorgang während der Herstellung des Trägers erfolgt und separate Handhabungsschritte, z. B. auch zum Zwischenlagern, ebenso entfallen können wie der Energieaufwand, der ansonsten erforderlich wäre, um einen bereits fertiggestellten Träger zumindest an seiner Vorderseite plastisch verformbar zu machen, um das direkte Aufkaschieren zu ermöglichen.

Wenn ein Träger aus einem thermoplastischen Kunststoffmaterial verwendet wird, kann auch bei dem bereits fertiggestellten Träger eine plastische Verformbarkeit für den Kaschiervorgang dadurch ermöglicht werden, dass der Träger erwärmt wird.

Wenn die Strukturfläche als textiles Flächenelement ausgestaltet ist, können die Fäden während der Herstellung dieses textilen Flächenelements mit unterschiedlichen Fadenspannungen geführt werden. Nach dem Herstellungsprozess, wenn die äußere Spannung entfällt, ziehen sich die zuvor unter Spannung gehaltenen Fäden zusammen, sodass sich in dem textilen Flächenelement automatisch eine gekräuselte bzw. wellige dreidimensionale Reliefstruktur ergibt. Je nachdem, welche Fäden mit welcher Spannung bei der Herstellung des textilen Flächenelements verarbeitet werden, kann die dreidimensionale Reliefstruktur bestimmt werden, welche später die fertige Strukturfläche aufweisen soll.

Im Vergleich zu einer flachen Ausgestaltung der Haltefläche werden erheblich höhere Haltekräfte für die Rohre vorschlagsgemäß dadurch ermöglicht, dass die Strukturfläche an ihrer Oberseite, der die Rohre anliegen, eine dreidimensionale Reliefstruktur aufweist. Dabei geht der vorliegende Vorschlag davon aus, dass die Rohre in den tieferen Bereichen der Haltefläche verlegt werden, so dass sie beispielsweise seitlich den erhöhten Bereichen anliegen können und sich eine vergleichsweise große Kontaktfläche mit der Haltefläche ergibt.

Zudem kann der Träger an seiner Oberseite, der die Strukturfläche anliegt, vorteilhaft seinerseits ebenfalls eine dreidimensionale Reliefstruktur aufweisen, so dass insgesamt eine Haltefläche geschaffen wird, die erhöhte und tiefere Bereiche aufweist. Die Rohre können in den tieferen Bereichen der Haltefläche verlegt werden, so dass sie beispielsweise seitlich den erhöhten Bereichen anliegen können und sich eine vergleichsweise große Kontaktfläche mit der Haltefläche ergibt.

Parallele Rippen können in einer ersten Ausführungsform die erhöhten Bereiche der Reliefstruktur eines solchen Trägers bilden, sodass sich zwischen zwei solchen parallelen Rippen jeweils eine Rinne ergibt, in die das Rohr mit einem Teil seines Umfangs eingelegt werden kann. Die Kontaktfläche zwischen dem Rohr und der Haltefläche ist somit deutlich größer als bei Auflage eines Rohres auf einer planen Haltefläche, so dass sich dementsprechend eine vergrößerte Wirkfläche zwischen dem Häkchenteil am Rohr und dem Flauschteil an der Folie zur Herstellung eines Häkchenverschlusses ergibt. Dementsprechend sind größere Abzugskräfte erforderlich, um das Rohr von der Haltefläche zu trennen und dementsprechend zuverlässig ist das Heizungsrohr an der Haltefläche fixiert.

Insbesondere wenn die Strukturfläche lediglich bereichsweise mit dem Träger fest verbunden ist, nämlich wo der Träger erhöhte Bereiche aufweist, ergibt sich die Möglichkeit, dass sich die Haltefläche problemlos verformen und an das Rohr anlegen kann, welches auf die Haltefläche gedrückt wird. Wenn beispielsweise die Haltefläche während des Kaschiervorgangs mittels einer Walze auf den Träger gepresst wird, kann je nach Größe der Walze und der Reliefstruktur des Trägers bewirkt werden, dass ein Kontakt der Haltefläche nur mit den erhöhten Bereichen des Trägers erfolgt. Zwischen den erhöhten Bereichen ergeben sich folglich Bereiche, in denen die Haltefläche in einem geringen Abstand oberhalb des Trägers gespannt ist bzw. geringfügig durchhängt, sodass in diesen sogenannten tieferen Bereichen die Haltefläche der Haltefläche vergleichsweise frei beweglich ist und sich dem Rohrumfang eines an die Haltefläche angelegten Rohres anpassen kann.

Der gleiche Vorteil kann auch mit einer anderen Reliefstruktur des Trägers erzielt werden, beispielsweise mit erhöhten Bereichen, die in Form von gleichgroßen oder unterschiedlich großen Noppen ausgestaltet sind, oder die kreuzartig ausgestaltet sein können. Durch entsprechende Abstände zwischen diesen jeweiligen erhöhten Bereichen ergeben sich Mulden, die ähnlich wie die erwähnten Rinnen zwischen zwei parallelen Rippen wirken und ein Rohr mit einem Teil seines Umfangs aufnehmen können. Rein beispielhaft wird nachfolgend öfters von Rippen und Rinnen die Rede sein, wobei dies jedoch lediglich beispielhaft für die Ausgestaltung von tiefen und erhöhten Bereichen der Haltefläche steht.

Vorteilhaft kann der Träger durch eine dreidimensional verformte Tiefziehfolie geschaffen sein. Dies ermöglicht eine wirtschaftliche Herstellung der Haltefläche. Dadurch, dass die Tiefziehfolie mittels einer Thermoverformung ihre Reliefstruktur erhält, weist sie eine Temperatur auf, die das anschließende Aufkaschieren der Strukturfläche mit vergleichsweise geringem Energieeinsatz und ohne den Einsatz zusätzlicher Materialien wie z. B. Klebstoff ermöglicht. Durch die Reliefstruktur der dreidimensional verformten Tiefziehfolie erhält auch die Oberfläche der resultierenden Haltefläche eine Reliefstruktur, die tiefe und erhöhte Bereiche aufweist, nachdem der Träger mit der Strukturfläche versehen worden ist.

Eine Vergussmasse kann aufgebracht werden, nachdem die Flächenheizungsrohre auf der Haltefläche verlegt worden sind. Die Flächenheizungsrohre sind nach dem Aushärten der Vergussmasse endgültig in ihrer gewünschten Anordnung fixiert. Die Haltefläche kann vorteilhaft eine Vielzahl von Durchbrüchen aufweisen, so dass die Vergussmasse, an den Untergrund angebunden wird und die Haltefläche mitsamt den Flächenheizungsrohren an dem Untergrund festgelegt wird.

Vorteilhaft kann vorgesehen sein, dass die Haltefläche eine Höhe von höchstens 10 mm aufweist. So kann eine vorschlagsgemäße Haltefläche flach ausgestaltet werden und dennoch für Rohre unterschiedlicher Durchmesser geeignet sein. Die flache Ausgestaltung der Haltefläche ermöglicht zudem die einfachere Herstellung des Trägers, beispielsweise indem eine Tiefziehfolie nur geringfügig verstreckt werden muss, was wirtschaftlich vorteilhaft ist.

Insbesondere kann vorteilhaft vorgesehen sein, dass die Haltefläche eine Höhe von höchstens 3 mm aufweist. Bei praktischen Versuchen hat sich herausgestellt, dass zwischen zwei erhöhten Bereichen, beispielsweise Rippen, bereits eine Mulde bzw. Rinne von 1 bis 2 mm Tiefe eine erheblich vergrößerte Kontaktfläche zwischen den beiden zusammenwirkenden Bestandteilen des Häkchenverschlusses am Rohr einerseits und an der Haltefläche andererseits ermöglicht. Abgesehen von den wirtschaftlichen Vorteilen bei der Herstellung der Haltefläche wird auch der Transport erheblich wirtschaftlicher, wenn die Haltefläche flacher ausgestaltet werden kann, weil für eine mit Haltefläche abzudeckende Fläche ein deutlich geringeres Transportvolumen erforderlich ist.

Die beiden erwähnten parallelen Rippen, die zwischen sich eine Mulde zur teilweisen Aufnahme eines Rohres schaffen, werden nachfolgend als eine Linie bezeichnet und es kann vorteilhaft vorgesehen sein, auf der Haltefläche den Verlauf der Rippen in der Art von sich kreuzenden Linien vorzusehen, so dass für unterschiedliche Verlegerichtungen der Rohre jeweils entsprechende Mulden bzw. Rinnen geschaffen werden, in denen die Rohre zuverlässig fixiert werden können. Ähnliches gilt für die alternative Ausgestaltung von erhöhten Bereichen in der Reliefstruktur des Trägers und für den sich dadurch ergebenden Verlauf von tieferen Bereichen in der Oberfläche der Haltefläche: auch in diesem Fall ergeben sich durchgehende, tiefere Linien zwischen den erhöhten Bereichen. Um die Verlegung der Rohre in unterschiedlichen Richtungen und somit mit unterschiedlichen, jeweils gewünschten Verlegemustern zu ermöglichen, können die erwähnten Linien vorteilhaft in einer sich kreuzenden Anordnung vorgesehen sein, wobei in jeder Richtung jeweils eine Vielzahl von derartigen Linien parallel zueinander vorgesehen ist.

Dabei kann vorteilhaft vorgesehen sein, dass der Abstand der Linien zueinander größer ist als der Abstand zweier eine Linie begrenzender erhöhter Bereiche, beispielsweise der beiden eine Rinne bildenden Rippen. Die beiden Rippen können beispielsweise in einem Abstand von 8 bis 20 mm zueinander verlaufen und die Linien können beispielsweise einen Abstand zwischen 4 und 10 cm zueinander aufweisen.

Vorteilhaft können die Linien in einem quadratischen Raster angeordnet sein, so dass Rohre in einer Längsrichtung und in einer dazu senkrecht verlaufenden Querrichtung verlegt werden können und Verlegeraster mit den entsprechenden Rasterabständen geschaffen werden.

Vorteilhaft kann in den Flächen, die sich zwischen den kreuzenden Linien ergeben, die Anordnung von Erhebungen vorgesehen sein. Wenn beispielsweise die Linien beiderseits von Rippen begrenzt werden, können zusätzlich zu den Rippen weitere Erhebungen in diesen Flächen vorgesehen sein. Diese Erhebungen können wie die anderen erhöhten Bereiche geformt sein, oder sie können eine davon abweichende Form aufweisen. Sie dienen dazu, bogenförmig verlaufende Rohre zu führen. In Freiräumen, die zwischen den erhöhten Bereichen wie zum Beispiel den Rippen vorgesehen sind und welche tiefere Bereiche der Haltefläche bilden, bilden diese zusätzlichen Erhebungen Konturen, denen ein bogenförmig verlaufendes Rohr anliegen kann. Wenn beispielsweise ein Rohr in einem Bogen von 90° verlegt werden soll und die erwähnten Linien in einem quadratischen Raster verlaufen, so kann das Rohr im Bereich des Bogens ebenfalls eine vergrößerte Kontaktfläche mit der Haltefläche aufweisen verglichen mit einer planen Haltefläche, da die erwähnten Erhebungen sich nicht dort befinden, wo das Rohr mit seiner tiefsten Stelle der Haltefläche anliegt, sondern das Rohr kann vielmehr zwischen den Erhebungen verlegt werden, so dass die Erhebungen im Rohr beispielsweise radial innen oder radial außen in seinem Bogenverlauf anliegen.

Um die erwähnten Linien zweier benachbarter Halteflächen miteinander fluchtend anzuordnen, kann vorteilhaft vorgesehen sein, zwei benachbarte Halteflächen miteinander zu verbinden, so dass diese nicht gegeneinander verrutschen und so dass dementsprechend das Verlegen von Rohren auch über mehrere Halteflächen hinweg erleichtert wird. Daher kann an wenigstens einem Rand der Haltefläche ein Überlappungsstreifen vorgesehen sein, der unter der Haltefläche vorsteht, sich also seitlich über den Rand der Haltefläche hinaus weiter erstreckt und der mit einer zweiten gleichartigen Haltefläche verklebt werden kann.

Eine besonders einfache Handhabung der beiden Halteflächen kann dadurch begünstigt werden, dass die Haltefläche selbstklebend ausgestaltet ist, um im Überlappungsbereich eine Verklebung mit einer zweiten gleichartigen Haltefläche zu ermöglichen. Beispielsweise kann der Überlappungsstreifen auf seiner Oberseite selbstklebend ausgestaltet sein, so dass die zweite Haltefläche auf den selbstklebenden Überlappungsstreifen aufgelegt werden kann und somit die beiden benachbarten Halteflächen miteinander verbunden sind. Alternativ dazu kann vorteilhaft vorgesehen sein, dass die Haltefläche an ihrer Unterseite selbstklebend ausgestaltet ist. Hierdurch ist einerseits die Verklebung mit dem Überlappungsstreifen einer benachbarten Haltefläche möglich. Vorteilhaft jedoch kann auch über diesen Überlappungsbereich hinausgehend die Haltefläche an ihrer Unterseite selbstklebend ausgestaltet sein, so dass die Haltefläche, wenn sie auf einem Untergrund verlegt wird, durch die selbstklebenden Eigenschaften in ihrer Lage fixiert ist, was anschließend die Verlegung der Rohre erheblich erleichtert, so dass keine zusätzlichen Elemente erforderlich sind, wie beispielsweise formstabile Trägerplatten o. dgl., auf denen die Haltefläche befestigt ist. Auf diese Weise kann eine möglichst geringe Aufbauhöhe für die Flächenheizung erzielt werden, so dass beispielsweise bei Renovierungsarbeiten die nachträgliche Montage von Flächenheizungen begünstigt wird in Räumen, die ursprünglich nicht für die Montage einer Flächenheizung vorgesehen waren.

Die Strukturfläche der Haltefläche, die bei einem Häkchenverschluss auch als Flausch oder Velours bezeichnet wird, kann ein Gewirke, Schlaufen oder pilzförmige Halteelemente aufweisen. Vorteilhaft kann vorgesehen sein, dass die Strukturfläche als textiles, eine Vielzahl von Schlaufen aufweisendes Flächenelement eines Häkchenverschlusses ausgestaltet ist. Diese Ausgestaltung der Strukturfläche ermöglicht einen sehr flachen Aufbau der Haltefläche, eine wirtschaftliche Herstellung der Haltefläche und ermöglicht zudem ausreichend hohe Haltekräfte zur sicheren Festlegung von Rohren, die als zweites Verschlusselement eines Haftverschlusses den Häkchenteil eines Häkchen- oder Klettverschlusses aufweisen.

Ausführungsbeispiele der Erfindung werden anhand der rein schematischen Darstellungen nachfolgend näher erläutert. Dabei zeigt
- Fig. 1: eine Draufsicht auf ein erstes Ausführungsbeispiel einer Haltefläche,
- Fig. 2 und 3: zwei weitere Ausführungsbeispiele mit unterschiedlichen Geometrien der Reliefstrukturen, wobei jeweils die Strukturfläche teilweise von dem Träger entfernt ist,
- Fig. 4 und 5: jeweils einen Vertikalschnitt durch einen Abschnitt einer Haltefläche.

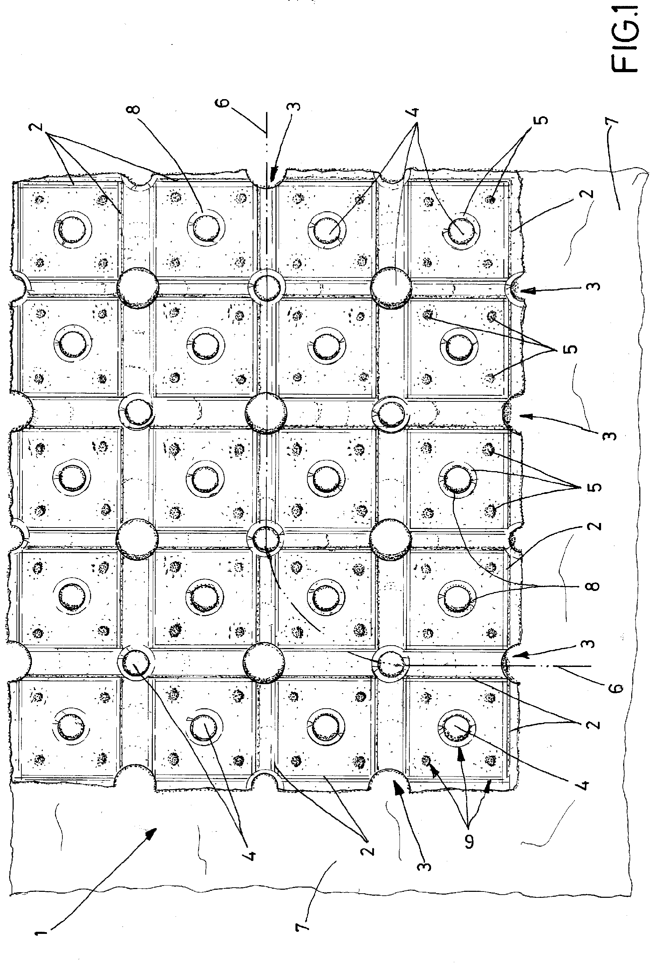

In Fig. 1 ist mit 1 insgesamt eine Haltefläche bezeichnet. Die Haltefläche 1 ist bei diesem Ausführungsbeispiel so ausgestaltet, dass sie insbesondere dazu dient, Kabel oder Rohre wie z. B. ein serpentinenförmig verlegtes Flächenheizungsrohr sicher zu halten.

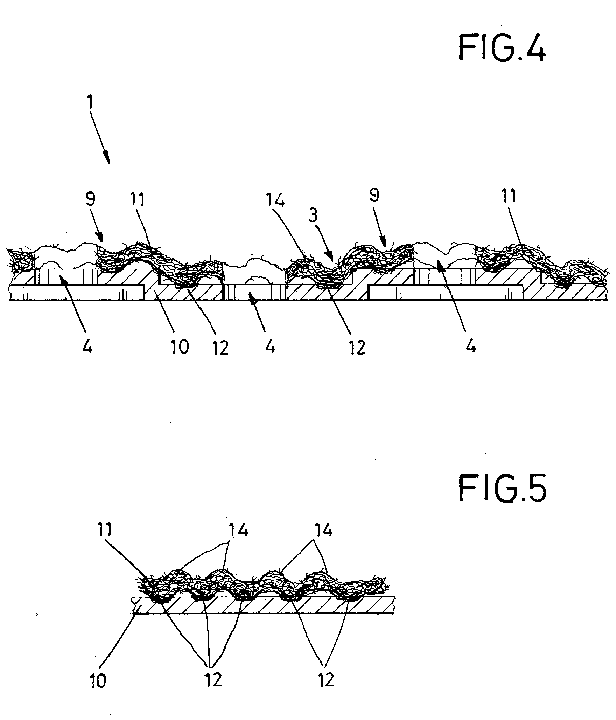

Der grundsätzliche Aufbau der Haltefläche 1 ist aus Fig. 5 ersichtlich: Es handelt sich dabei um eine Kunststofffolie als Träger 10, auf den ein als Velours, Flauschteil oder Schlaufenteil bezeichneter Teil eines Häkchenverschlusses als Strukturfläche 11 unmittelbar aufkaschiert ist. Die Strukturfläche 11 erstreckt sich über die gesamte Fläche des Trägers 10, so dass sie diesen vollflächig bedeckt. Der Träger 10 ist in Fig. 5 als ebenes Element dargestellt, ohne eine Reliefstruktur. Vorschlagsgemäß kann wahlweise ein insgesamt ebener Träger 10 verwendet werden oder ein Träger mit einer Reliefstruktur, von dem Fig. 5 dann lediglich einen kleinen Abschnitt zeigt, in welchem der Träger 10 keine dreidimensionale Profilierung aufweist.

Die in Fig. 5 oben dargestellte, vorschlagsgemäß ausgestaltete Strukturfläche 11 ist nicht nur mikroskopisch rau, nämlich aufgrund der Materialbeschaffenheit des Flauschteils, der als ein textiles Gewirke hergestellt worden ist. Die Strukturfläche 11 ist auch makroskopisch rau, da bei der Herstellung dieses Flauschteils die Fäden mit unterschiedlicher Fadenspannung geführt wurden, sodass sich eine dreidimensionale, reliefartige, gekräuselte, bzw. wellenförmige Struktur dieses textilen Flächenelements ergibt. Derartige Strukturen werden auch als "crushed", also knittrig, bezeichnet. Das Material der Strukturfläche 11 ist also im Vergleich zu einer glatten, nicht welligen Strukturfläche mit einem Materialüberschuss auf den Träger 10 aufgebracht.

Ein ähnlicher Effekt lässt sich erzielen, indem ein zunächst glatt hergestelltes, nicht welliges Material wie z. B. das erwähnte textile Gewirke mit einer ausreichend stark profilierten Walze an den Träger 10 angelegt wird.

Die Strukturfläche 11 liegt nicht nur einer Oberfläche des Trägers 10 an, wie dies z. B. bei einer Verklebung der Fall wäre, sondern sie ist durch den Kaschiervorgang in das Material des Trägers 10 eingepresst worden, wobei der aus Kunststoff bestehende Träger 10 für den Kaschiervorgang erweicht worden ist, z. B. durch Erwärmung. Tiefere Abschnitte 12 der Strukturfläche 11, die als Wellentäler der welligen Reliefstruktur der Strukturfläche 11 bezeichnet werden können, befinden sich daher innerhalb des Trägers 10. Höhere Abschnitte 14 der Strukturfläche 11, die als Wellenberge der welligen Reliefstruktur der Strukturfläche 11 bezeichnet werden können, befinden sich hingegen nicht nur außerhalb des Trägers 10, sondern liegen dem Träger 10 nicht an, so dass sie frei beweglich und dementsprechend verformbar sind.

Der Träger 10 von Fig. 1 ist als dreidimensional profilierte Tiefziehfolie ausgestaltet. Der Träger und somit die Haltefläche 1 weist Rippen 2 auf, von denen jeweils vier quadratisch angeordnet sind und wobei die jeweils geschaffenen Quadrate im Abstand zueinander angeordnet sind. So schaffen jeweils zwei parallele, benachbarte Rippen 2 zwischen sich eine Rinne 3, die eine Tiefe von 1 bis 2 mm aufweist und in die ein Rohr mit einem Teil seines Umfangs eingelegt werden kann. Die Rinnen 3 verlaufen in gleichmäßigen Abständen und in zwei sich um 90° kreuzenden Richtungen.

In der Mitte eines jeden von den Rippen 2 gebildeten Quadrats ist jeweils ein zentraler Durchbruch 4 in Form eines kreisförmigen Lochs vorgesehen. Auch an jedem Kreuzungspunkt der Rinnen 3 ist ein Durchbruch 4 vorgesehen, wobei die Durchbrüche 4 unterschiedliche Größen aufweisen.

Die Haltefläche 1 weist eine Reliefstruktur auf, die entsprechend der Ausgestaltung der Träger-Tiefziehfolie tiefe Bereiche wie z. B. die Rinnen 3 und erhöhte Bereiche aufweist, die allgemein mit 9 gekennzeichnet sind und unterschiedlich ausgestaltet sein können, z. B. in Form der erwähnten Rippen 2. Innerhalb der durch vier Rippen 2 eingeschlossenen Quadrate sind um den dort jeweils vorgesehenen zentralen Durchbruch 4 herum im Abstand weitere erhöhte Bereiche 9 in Form von vier Erhebungen 5 vorgesehen, die punktförmig ausgestaltet sind. Auch die Ränder um die zentralen Durchbrüche 4 im Inneren eines jeden Quadrats bilden erhöhte Bereiche 9, nämlich in Form von ringförmigen Erhebungen 8.

Gestrichelt ist sehr schematisch ein Rohr 6 symbolisiert. Das Rohr 6 verläuft mit einem ersten Abschnitt in einer Rinne 3, die in Längsrichtung der Haltefläche 1 verläuft, und mit einem zweiten Abschnitt in einer Rinne 3, die quer dazu verläuft. In dem bogenförmigen Abschnitt dazwischen verläuft das Rohr 6 zwischen den erwähnten Erhebungen 5 und 8, so dass der Häkchenteil des Häkchenverschlusses, der außen am Rohr 6 vorgesehen ist, auch in dem bogenförmigen Abschnitt zwischen den Rinnen 3 eine möglichst große Kontaktfläche zur Haltefläche 1 aufweist. Auch in diesem bogenförmigen Abschnitt des Rohres 6 stellt die Haltefläche 1 muldenartig bzw. rinnenartig eine größere Strukturfläche 11 für das Rohr 6 bereit, als es bei einer vollkommen planen Ausgestaltung der Haltefläche 1 der Fall ist. Hinzu kommt die vergrößerte Kontaktfläche zwischen Rohr und Haltefläche 1 durch die makroskopische Reliefstruktur der Strukturfläche 11, so dass insgesamt sehr hohe Halte- bzw. Abzugskräfte erzielt werden und das Rohr sicher an der Haltefläche 1 gehalten wird.

An zwei Seiten, nämlich einer Längsseite und einer Stirnseite, weist die Haltefläche 1 einen Überlappungsstreifen 7 auf. An ihrer Unterseite ist die Haltefläche 1 selbstklebend beschichtet. Diese Beschichtung kann entweder vollflächig vorgesehen sein oder in Art eines aus Linien oder Punkten gebildeten Rasters, so dass jedenfalls die Haltefläche 1 sowohl auf einem Untergrund als auch auf einem Überlappungsstreifen 7 einer benachbarten gleichartigen Haltefläche 1 fixiert werden kann. In diesem Fall ist der Überlappungsstreifen 7 an der Unterseite der Haltefläche 1 vorgesehen.

Alternativ dazu kann der Überlappungsstreifen 7 an der Oberseite der Haltefläche 1 vorgesehen sein: Er kann beispielsweise durch die Strukturfläche gebildet werden, also durch das textile Flächenelement, welches als so genannter Flauschteil die Schlaufen des Häkchenverschlusses bildet. Die Strukturfläche ragt durch einen entsprechend groß bemessenen Zuschnitt an den zwei Seiten über den Träger, nämlich die Tiefziehfolie, hinaus, wie aus Fig. 1 ersichtlich. An seiner Unterseite ist der Überlappungsstreifen 7 so ausgestaltet, dass er mit einer benachbarten Haltefläche 1 verbunden werden kann. Hierzu ist der Überlappungsstreifen 7 an seiner Unterseite beispielsweise mit einem Streifen eines Häkchenteils des Häkchenverschlusses versehen, so dass der Überlappungsstreifen 7 von oben auf die Strukturfläche einer benachbarten Haltefläche 1 aufgedrückt und mit dieser verbunden werden kann. Oder der oberseitig angeordnete Überlappungsstreifen 7 kann zu demselben Zweck an seiner Unterseite selbstklebend beschichtet sein.

Die Herstellung der Haltefläche 1 ist wirtschaftlich vorteilhaft möglich: Durch die geringe Dreidimensionalität, die bei der tiefgezogenen Haltefläche 1 vorgesehen ist, wird deren Herstellung zu vergleichsweise geringen Kosten positiv beeinflusst. Zudem sind die ringförmigen Erhebungen 8, die um die zentralen Durchbrüche 4 vorgesehen sind, dadurch erzeugt, dass dort zunächst eine großflächige kreisrunde Erhebung vorgesehen war, aus der dann der entsprechende kreisförmige Flächenanteil herausgestanzt worden ist, um den zentralen Durchbruch 4 in der Mitte eines Quadrats zu schaffen. Dadurch, dass der Flauschteil des Häkchenverschlusses als Strukturfläche auf den Träger, nämlich auf die Tiefziehfolie aufkaschiert ist, ist ein derartiger Stanzvorgang problemlos möglich, weil das aufkaschierte Flauschmaterial fest mit der Tiefziehfolie verbunden ist und insofern beim Stanzvorgang eine präzise Stanzlinie herstellbar ist, ohne dass sich das beispielsweise als Velours ausgestaltete Flauschmaterial ziehen könnte und nachgeben könnte, ohne durchstanzt zu werden.

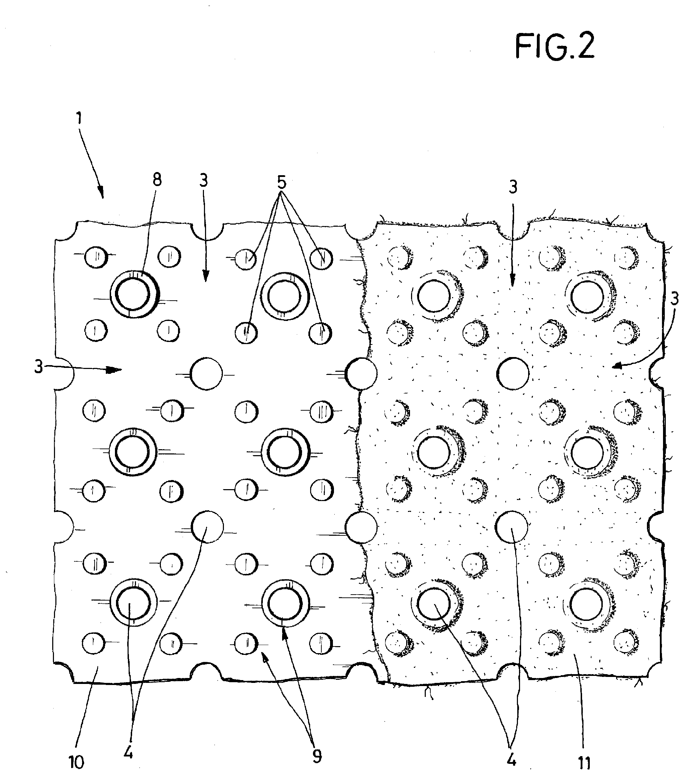

In Fig. 2 ist ein Ausführungsbeispiels einer Haltefläche 1 dargestellt, welches im Wesentlichen dem der Fig. 1 entspricht, allerdings sind in dem Träger keine Rippen vorgesehen, sondern die erhöhten Bereiche der Haltefläche 1 werden ausschließlich durch die Erhebungen 5 und 8 geschaffen. Wie beim Ausführungsbeispiel der Fig. 1 sind jeweils vier kleinere Erhebungen 5 in einem quadratischen Muster rings um eine zentrale, ringförmige Erhebung 8 angeordnet, und diese Anordnung von fünf Erhebungen 5 und 8 wird als eine Noppengruppe bezeichnet.

Es kann in weiterer Unterscheidung vom Ausführungsbeispiel der Fig. 1 vorgesehen sein, dass die vier kleineren Erhebungen 5 einer solchen Noppengruppe bei dem Ausführungsbeispiel der Fig. 2 einen größeren Abstand von der zentralen Erhebung 8 aufweisen als beim Ausführungsbeispiel der Fig. 1. Oder das quadratische Rastermaß, in welchem die einzelnen Noppengruppen zueinander angeordnet sind, kann kleiner sein als beim Ausführungsbeispiel der Fig. 1, sodass jedenfalls im Ergebnis zwischen den Noppengruppen geradlinig verlaufende und sich kreuzende Rinnen 3 geschaffen werden, welche eine ähnliche Breite aufweisen wie die Rinnen 3, die sich beim Ausführungsbeispiel der Fig. 1 zwischen den parallelen Rippen 2 ergeben.

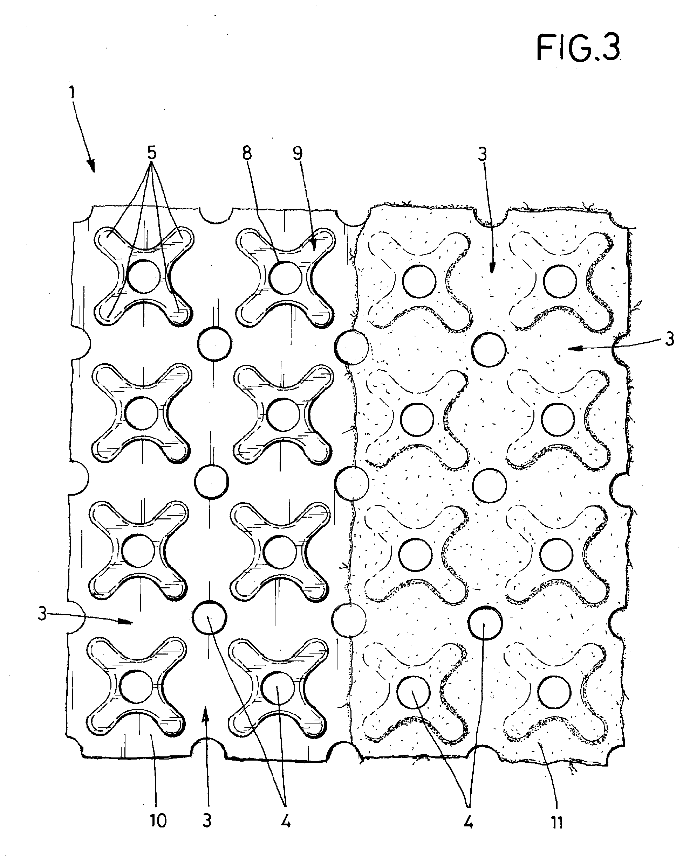

Beim Ausführungsbeispiel der Fig. 3 sind die vier kleineren Erhebungen 5, die bei den Ausführungsbeispielen der Fig. 1 und 2 separat ausgestaltet sind und jeweils die vier Eckpunkte eines Quadrats bilden, zu einem kreuzförmigen bzw. X-förmigen erhöhten Bereich 9 verbunden. Auch diese kreuz- bzw. X-förmigen erhöhten Bereiche 9 sind in einem quadratischen Raster angeordnet, sodass sich auch bei diesem Ausführungsbeispiel zwischen den erhöhten Bereichen 9 Rinnen 3 ergeben, die geradlinig verlaufen und sich kreuzen.

Bei den Ausführungsbeispielen der Fig. 2 und 3 können Durchbrüche 4 wie beim Ausführungsbeispiel der Fig. 1 vorgesehen sein, beispielsweise als zentrale Durchbrüche 4 stets in der Mitte einer Noppengruppe bzw. eines kreuzförmigen erhöhten Bereichs 9, sowie beispielsweise als Kreuzungs-Durchbrüche 4 stets dort, wo sich zwei Rinnen 3 kreuzen. Beim Ausführungsbeispiel der Fig. 3 verbinden somit die X-förmigen erhöhten Bereiche 9 nicht nur die vier kleineren Erhebungen 5, sondern um die zentralen Durchbrüche 4 herum bilden sie integral auch die Erhebungen 8, die beim Ausführungsbeispiel der Fig. 1 und 2 als separate Ringe ausgestaltet sind.

In Fig. 4 ist ein Vertikalschnitt durch eine Haltefläche 1 dargestellt, wobei der Schnitt durch zwei erhöhte Bereiche 9 sowie durch den Kreuzungsbereich zweier Rinnen 3 und somit durch die jeweiligen Durchbrüche 4 verläuft.

Die Haltefläche 1 besteht im Bereich dieses Vertikalschnitts aus lediglich zwei Elementen: eine dreidimensional verformte Tiefziehfolie weist durch ihre Verformung eine Reliefstruktur auf und bildet den unteren Träger 10, auf welchen die Strukturfläche 11 direkt aufkaschiert ist. Die Strukturfläche 11 ist als Flauschteil eines Häkchenverschlusses ausgestaltet und weist eine Vielzahl von Schlaufen auf. Beim Aufkaschieren wird die Strukturfläche 11 in das erwärmte Material des Trägers 10 eingedrückt, sodass sich auch ohne zusätzliche Materialien, wie zum Beispiel Klebstoff, eine feste Verbindung zwischen dem Träger 10 und der Strukturfläche 11 ergibt. Durch die wellenförmige Reliefstruktur der Strukturfläche 11 und / oder die Verwendung eines profilierten Andruck-Werkzeugs, z. B. einer profilierten Walze, geraten nur tiefere Abschnitte 12 der Strukturfläche 11 in Kontakt mit dem Träger 10.

Beim Aufkaschieren wird die Strukturfläche 11 auf die erhöhten Bereiche 9 der Reliefstruktur des Trägers 10 gedrückt. Zwischen den erhöhten Bereichen 9 hängt das Material der Strukturfläche 11 frei durch, gegebenenfalls ohne Kontakt mit dem Träger zu haben. Um beim Stanzen der Durchbrüche 4 im Kreuzungsbereich von Rinnen 3 den Stanzvorgang zu erleichtern und ein präzises Stanzergebnis sicherzustellen, kann ein so stark profiliertes Andruck-Werkzeug verwendet werden, so dass beispielsweise mittels einer profilierten Walze die Strukturfläche 11 auch in diesen tiefer liegenden Kreuzungsbereichen an den Träger 10 angedrückt werden kann und auch in diesen tiefen Bereichen des Trägers 10 die Strukturfläche 11 auf den Träger 10 aufkaschiert werden kann.

## Patentansprüche

1. Haltefläche (1),
wobei es sich um eine Haltefläche (1) zu Bauzwecken handelt,
und die Haltefläche (1) einen Träger (10) aufweist,
- der durch eine Tiefziehfolie gebildet ist, die dreidimensional verformt ist und eine Reliefstruktur bildet,
sowie eine Strukturfläche (11),
- die eine mikroskopische, zur Realisierung der Hafteigenschaften erforderliche Materialrauhigkeit aufweist,
- einen der beiden Teile eines Haftverschlusses bildet
- mit dem Träger (10) verbunden ist,
- und unmittelbar auf den Träger (10) aufkaschiert ist,
**dadurch gekennzeichnet,**
**dass** die Strukturfläche (11) mit einem Materialüberschuss auf dem Träger (10) befestigt ist,
derart, dass das Material der Strukturfläche (11) aufgrund des Materialüberschusses wellig auf dem Träger (10) aufliegt,
die Strukturfläche (11) zusätzlich zu ihrer mikroskopischen Materialrauhigkeit eine makroskopische, sich aus der Welligkeit ergebende Rauhigkeit an ihrer von dem Träger (10) abgewandten Oberfläche aufweist,
das Material der Strukturfläche (11) nur mit den tieferen Bereichen seines wellenförmigen Verlaufs an dem Träger (10) befestigt ist,
und die Strukturfläche (11) lediglich bereichsweise unmittelbar auf den Träger (10) aufkaschiert ist,
derart, dass sich unmittelbar miteinander verbundene Bereiche ergeben und Bereiche, an denen die Strukturfläche (11) lose auf dem Träger (10) angeordnet ist,
wobei die miteinander verbundenen Bereiche in Art eines Verlegerasters angeordnet sind.

2. Haltefläche nach Anspruch 1,
**dadurch gekennzeichnet,**
**dass** die Haltefläche (1) eine Vielzahl von Durchbrüchen (4) aufweist.

3. Haltefläche nach einem der vorhergehenden Ansprüche, **dadurch gekennzeichnet,**
**dass** die Reliefstruktur ein Muster aus sich kreuzenden Rinnen (3) bildet,
welche die Aufnahme eines Rohrs (6) mit einem Abschnitt seines Umfangs ermöglichen,
wobei jeweils zwei benachbarte erhöhte Bereiche (9) eine solche Rinne (3) zwischen sich bilden und jeweils eine Vielzahl von Rinnen (3) parallel nebeneinander angeordnet ist.

4. Haltefläche nach Anspruch 3,
**dadurch gekennzeichnet,**
**dass** der Abstand der Rinnen (3) zueinander größer ist als der Abstand zweier eine Rinne (3) bildender erhöhter Bereiche (9) zueinander.

5. Haltefläche nach Anspruch 3,
**dadurch gekennzeichnet,**
**dass** die Rinnen (3) in einem quadratischen Raster angeordnet sind.

6. Haltefläche nach Anspruch 3,
**dadurch gekennzeichnet,**
**dass** in den Flächen zwischen den sich kreuzenden Rinnen (3) Erhebungen (5, 8) vorgesehen sind und derart voneinander beabstandet sind, dass sich zwischen ihnen ein Freiraum ergibt, in welchem ein Rohr (6) bogenförmig und zwischen den Erhebungen (5, 8) verlaufend verlegbar ist.

7. Haltefläche nach einem der vorhergehenden Ansprüche, **dadurch gekennzeichnet,**
**dass** an wenigstens einem Rand ein unter der Haltefläche (1) vorstehender Überlappungsstreifen (7) vorgesehen ist, der mit einer zweiten, gleichartigen Haltefläche (1) verbindbar ist.

8. Haltefläche nach Anspruch 7,
**dadurch gekennzeichnet,**
**dass** die Haltefläche (1) eine Verklebung im Überlappungsbereich mit einer zweiten, gleichartigen Haltefläche (1) ermöglichend selbstklebend ausgestaltet ist.

9. Haltefläche nach einem der vorhergehenden Ansprüche, **dadurch gekennzeichnet,**
**dass** die Haltefläche (1) an ihrer Unterseite selbstklebend ausgestaltet ist.

10. Haltefläche nach den Ansprüchen 8 und 9,
**dadurch gekennzeichnet,**
**dass** die Haltefläche (1) an ihrer Unterseite auch über den Überlappungsbereich hinausgehend selbstklebend ausgestaltet ist.

11. Haltefläche nach einem der vorhergehenden Ansprüche, **dadurch gekennzeichnet,**
**dass** die Strukturfläche (11) als textiles, eine Vielzahl von Schlaufen aufweisendes Flächenelement eines Häkchenverschlusses ausgestaltet ist.

## Claims

1. Retaining surface (1), here a retaining surface (1) for building construction purposes, which retaining surface (1) incorporates a support element (10),
- which is formed by a deep-drawing film which is shaped three-dimensionally and forms a relief texture
as well as a textured surface (11)
- that has a microscopic material roughness needed to achieve the adhesive properties,
- that forms one of the two parts of an adhesive bond
- is connected to the support element (10),
- and is applied straight to the support element (10),
**characterised in that** the textured surface (11) is fastened to the support element (10) with an excess of material such that because of the excess of material the material of the textured surface (11) lies on the support element (10) corrugatedly,
**in that** in addition to its microscopic material roughness the textured surface (11) has because of the corrugations a macroscopic roughness on that surface that is oriented away from the support element (10),
**in that** the material of the textured surface (11) is fastened to the support element (10) by the lower parts of its corrugated area
and **in that** the textured surface (11) is applied straight to the support element (10) only areawise,
such that areas that are connected straight to one another and areas to which the textured surface (11) is disposed loosely on the support element (10),
where the areas connected to one another are arranged in the manner of a laying grid.

2. Retaining surface in accordance with claim 1, **characterised in that** the retaining surface (1) incorporates a large number of through-holes (4).

3. Retaining surface in accordance with any one of the preceding claims, **characterised in that** the relief texture forms a pattern of intersecting channels (3) that enable a pipe (6) to be seated in them by a portion of circumference of the pipe, wherein every two adjacent raised areas (9) form such a channel (3) between them and a large number of channels (3) is arranged parallel to each other.

4. Retaining surface in accordance with claim 3, **characterised in that** the distance between the channels (3) is greater than the distance between two raised areas (9) forming a channel (3).

5. Retaining surface in accordance with claim 3, **characterised in that** the channels (3) are arranged in a square grid.

6. Retaining surface in accordance with claim 3, **characterised in that** raised portions (5, 8) are provided for in the surfaces between the intersecting channels (3) and are set far enough apart from each other to form between them a free space in which a pipe (6) can be laid in a curve so as to extend between the raised portions (5, 8).

7. Retaining surface in accordance with any one of the preceding claims, **characterised in that** on at least one edge an overlap strip (7) that protrudes from under the retaining surface (1) and that can be joined to a second retaining surface (1) of the same kind is provided for.

8. Retaining surface in accordance with claim 7, **characterised in that** the retaining surface (1) is designed to be self-adhesive so that it can be bonded to a second retaining surface (1) of the same kind in its overlap area.

9. Retaining surface in accordance with any one of the preceding claims, **characterised in that** the retaining surface (1) is designed to be self-adhesive on its underside.

10. Retaining surface in accordance with claims 8 and 9, **characterised in that** the retaining surface (1) is designed to be self-adhesive also on its underside extending beyond the overlap area.

11. Retaining surface in accordance with any one of the preceding claims, **characterised in that** the textured surface (11) is designed as a textile flat part of a hook fastener incorporating a large number of loops.

## Revendications

1. Surface de retenue (1), sachant qu'il s'agit d'une surface de retenue (1) destinée pour usages constructifs et que la surface de retenue (1) présente un support (10),
- lequel support est formé par une feuille emboutie qui est déformée de façon tridimensionnelle et forme une structure en relief,
et qu'il s'agit d'une surface structurée (11)
- présentant une rugosité de matériau microscopique nécessaire pour obtenir les caractéristiques d'adhérence,
- sachant que l'une des deux parties forme une fermeture adhésive,
- qu'elle est reliée au support (10),
- et qu'elle est directement contrecollée sur le support (10),
**caractérisée en ce que** la surface structurée (11) est fixée avec un excédent de matériau sur le support (10),
de sorte que le matériau de la surface structurée (11) applique de manière ondulée sur le support (10) en raison de l'excédent de matériau,
**en ce que** la surface structurée (11) présente en plus de sa rugosité microscopique une rugosité macroscopique résultant de la géométrie ondulée sur sa surface ne regardant pas le support (10),
**en ce que** le matériau de la surface structurée (11) n'est fixé que par les zones plus profondes de son tracé ondulé sur le support (10),
et **en ce que** la surface structurée (11) est contrecollée directement sur le support (10) uniquement de manière locale,
de sorte qu'il en résulte des zones directement reliées entre elles et des zones dans lesquelles la surface structurée (11) est disposée non fixée sur le support (10),
sachant que les zones reliées entre elles sont disposées sous la forme d'une grille de pose.

2. Surface de retenue selon la revendication 1, **caractérisée en ce que** la surface de retenue (1) présente un grand nombre de perforations (4).

3. Surface de retenue selon l'une des revendications précédentes, **caractérisée en ce que** la structure en relief forme un motif composé de rigoles (3) qui se croisent et permettent de recevoir un tuyau (6) avec un segment de sa circonférence, sachant que respectivement deux zones haussées (9) voisines forment une telle rigole (3) entre elles et que respectivement un grand nombre de rigoles (3) sont disposées parallèles les unes à côté des autres.

4. Surface de retenue selon la revendication 3, **caractérisée en ce que** l'écart des rigoles (3) entre elles est supérieur à l'écart réciproque de deux zones haussées (9) formant une rigole (3).

5. Surface de retenue selon la revendication 3, **caractérisée en ce que** les rigoles (3) sont disposées dans une grille carrée.

6. Surface de retenue selon la revendication 3, **caractérisée en ce que** dans les surfaces situées entre les rigoles (3) qui se croisent, des éminences (5, 8) sont prévues et distantes les unes des autres de sorte qu'il résulte entre elles un espace libre dans lequel un tuyau (6) puisse être posé avec un tracé incurvé et situé entre les éminences (5, 8).

7. Surface de retenue selon l'une des revendications précédentes, **caractérisée en ce qu'**au moins sur un bord est prévu une bande de chevauchement (7) faisant saillie sous la surface de retenue (1), bande qu'il est possible de relier à une seconde surface de retenue (1) du même type.

8. Surface de retenue selon la revendication 7, **caractérisée en ce que** la surface de retenue (1) est configurée pour permettre dans la zone de chevauchement le collage autocollant avec une seconde surface de retenue (1) du même type.

9. Surface de retenue selon l'une des revendications précédentes, **caractérisée en ce que** la face inférieure de la surface de retenue (1) est configurée autocollante.

10. Surface de retenue selon les revendications 8 et 9, **caractérisée en ce que** la face inférieure de la surface de retenue (1) est configurée autocollante aussi au-delà de la zone de chevauchement.

11. Surface de retenue selon l'une des revendications précédentes, **caractérisée en ce que** la surface structurée (11) est configurée comme élément textile plat d'une fermeture auto-agrippante, présentant un grand nombre de boucles.
